# FASCICULE DE BREVET EUROPEEN

(11) **EP 1 914 822 B1**
(45) Date de publication et mention de la délivrance du brevet: **14.07.2010**
(21) Numéro de dépôt: 06301244.7
(22) Date de dépôt: 12.12.2006
(51) Int. Cl.: H01M 2/34, H01M 10/42

(54) **Système de protection de batterie**
Batterie Schutzsystem
Battery protection system

(30) Priorité: 13.10.2006 GB 0620266
(43) Date de publication de la demande: 23.04.2008
(73) Titulaire: Delphi Technologies, Inc., Troy, MI 48007 (US)
(72) Inventeur: DALI, M. Nabil, 92290, CHATENAY MALABRY (FR); LABOUDI, M. Abdelaziz, 42369, WUPPERTAL (DE)
(74) Mandataire: Denton, Michael John

(56) Documents cités:
- DE-A1-102004 054 821
- US-B1- 6 331 764

## Description

La présente invention se rapporte à un système de protection de batterie, et en particulier à un système de protection de batterie pour la batterie d'un véhicule automobile.

Les systèmes de protection de batterie connus ne se prêtent pas, en général, à une maintenance aisée et ne permettent pas des configurations de montage différentes. De plus, les systèmes connus tendent à occuper un espace considérable.

US 6 331 764 décrit une batterie ayant un circuit de protection (105) trempé dans une couche protectrice (160).

Dans les systèmes de protection de batterie connus, un relais est connecté à un ordinateur de bord distant qui communique avec le relais et réalise des fonctions de contrôle ou gestion de la batterie, de diagnostic du relais ou de la batterie, ainsi que d'autres fonctions. Il est donc nécessaire de concevoir le relais et l'ordinateur de bord en parallèle pour assurer leur compatibilité. De plus, la modification d'une des fonctions réalisées par l'ordinateur de bord peut nécessiter une modification d'autres fonctions.

Un but de l'invention est de surmonter les inconvénients mentionnés ci-dessus.

A cet effet, un système de protection de batterie selon l'invention comprend un boîtier ; des moyens de commutation montés dans le boîtier et ayant une première borne pour une connexion électrique à une source de charge pour une batterie, et une deuxième borne pour une connexion électrique à la batterie ; des moyens d'entrée de signal attachés au boîtier pour recevoir un ou plusieurs signaux depuis des moyens de commande ; une carte de commande montée dans le boîtier et connectée entre les moyens de commutation et les moyens d'entrée de signal pour commander le fonctionnement des moyens de commutation en fonction dudit un ou plusieurs signaux ; et un enduit amovible couvrant les moyens de commutation, les bornes et la carte de commande dans le boîtier.

Grâce à ces caractéristiques, le système de protection présente plusieurs avantages. La carte de commande peut être configurée pour réaliser des fonctions de gestion de la batterie ou de diagnostic, et il n'est pas nécessaire de tenir compte du fonctionnement d'un ordinateur de bord ou d'un autre contrôleur lors du développement de ces fonctions. Il suffit d'assurer une compatibilité au niveau du ou des signaux échangés au niveau des moyens d'entrée de signal. L'utilisation d'un enduit amovible, tel un adhésif thermofusible, assure une étanchéité et signifie qu'un ou plusieurs composant dans le boîtier peut être retiré et/ou remplacé dans un but de maintenance ou pour un changement de configuration, sans destruction du système complet. Le système selon la présente invention se prête à un montage compact, de faible volume.

L'enduit amovible est de préférence un adhésif thermofusible.

Les moyens de commutation sont de préférence un relais. Le relais est de préférence un relais bistable, qui a de préférence une position par défaut qui connecte électriquement la première et la deuxième borne. Cet agencement garantit que la batterie reste connectée en cas de défaillance de signal.

De préférence, le boîtier présente une ouverture adjacente aux moyens de commutation. Cela permet une évacuation aisée de la chaleur générée par les moyens de commutation. L'ouverture peut également s'étendre de manière adjacente à la carte de commande.

Avantageusement, lesdits moyens de commutation présentent, en fonctionnement, une portion chaude et une portion froide, ladite carte de commande étant agencée de manière adjacente à ladite portion froide, à distance de ladite portion chaude. Ainsi la carte de commande n'est pas ou peu soumise à la chaleur générée par la portion chaude. Elle n'a donc pas à être conçue pour résister à de hautes températures. De préférence, la carte de commande est reliée aux moyens de commutation par des contacts électriques qui sont situés au niveau de la portion froide.

Selon un mode de réalisation particulier, lesdits moyens de commutation comprennent un boîtier de relais, lesdites bornes faisant saillie hors dudit boîtier de relais, ledit boîtier de relais, ladite carte de commande et lesdits moyens d'entrée de signal formant un ensemble qui présente un contour sensiblement rectangulaire. Cette configuration est particulièrement efficace pour que le système présente un montage compact, de faible volume.

De préférence, ladite carte de commande comprend des moyens de commande de carte aptes à mettre en oeuvre un procédé de gestion de batterie et/ou de diagnostic de batterie.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
- la figure 1 est une vue en perspective d'un système de protection de batterie selon un premier mode de réalisation de l'invention, et
- la figure 2 est une vue en perspective d'un système de protection de batterie selon un deuxième mode de réalisation de l'invention.

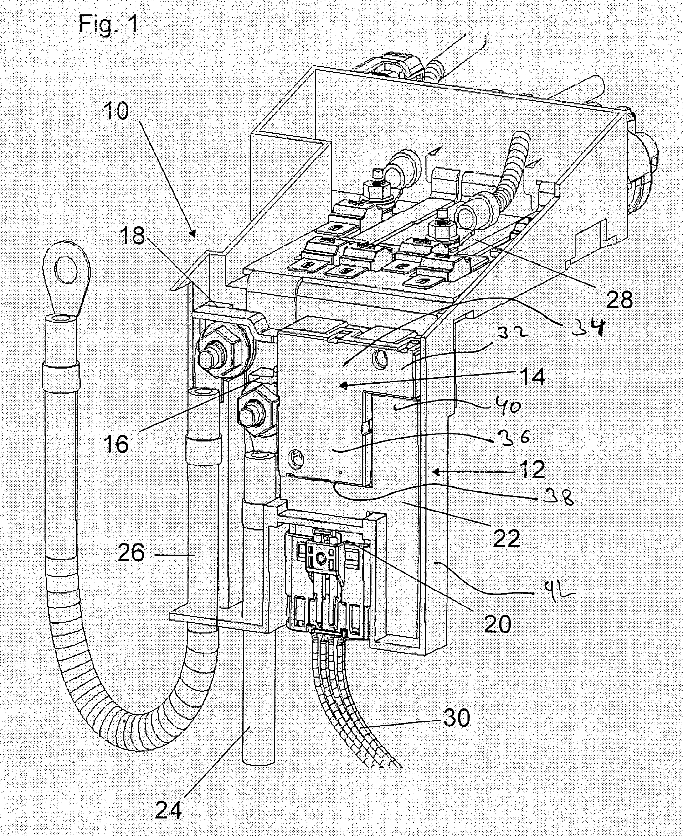

En se référant à la figure 1, le système de protection de batterie 10 comprend un boîtier 12 ; un relais 14 monté dans le boîtier 12 et ayant une première borne 16 et une deuxième borne 18 ; un connecteur de signal d'entrée 20 attaché au boîtier 12 ; et une carte de commande 22 montée dans le boîtier 12 et connectée entre le relais 14 et le connecteur de signal d'entrée 20. Un enduit amovible, de préférence un adhésif thermofusible, recouvre le relais 14, les bornes 16 et 18 et la carte de commande 22 dans le boîtier 12. L'enduit amovible pourrait ne recouvrir que certains de ces éléments ; par exemple les bornes 16 et 18 pourraient ne pas être recouvertes.

Le relais 14, qui est de préférence un relais bistable, a de préférence une position par défaut dans laquelle les première et deuxième bornes sont connectées électriquement. La première borne est connectée électriquement à un alternateur ou une autre source de charge pour une batterie (non représentés) par un premier fil électrique 24. La deuxième borne 18 est connectée à la batterie par un deuxième fil électrique 26. La première borne 16 est également électriquement connectée à un circuit 28 fournissant de la puissance à une ou plusieurs charges électriques (non représentées).

Le relais 14 comprend un boîtier de relais 32, et les bornes 16 et 18 font saillie hors du boîtier de relais 32. La structure interne du boîtier de relais 32 présente au moins une bobine interne et n'est pas décrite en détail ici. En fonctionnement, le boîtier de relais 32 présente une zone froide 36 au niveau de la bobine interne, et une zone chaude 34.

Le connecteur de signal d'entrée 20 est connecté électriquement à des fils de signaux 30 qui reçoivent des signaux depuis (et/ou envoient des signaux à) des moyens de commande (non représentés). Les moyens de commande peuvent être une unité de contrôle moteur pour un véhicule automobile, et/ou un ou plusieurs capteurs. Il n'est pas nécessaire que ces moyens de commande soient aptes à réaliser une fonction de gestion de la batterie et/ou de diagnostic de la batterie ou du relais.

La carte de commande 22 connecte électriquement le connecteur 20 avec le relais 14. La carte de commande 22 a des composants appropriés pour commander le fonctionnement du relais 14 en fonction des signaux reçus par le connecteur 20, par exemple un microcontrôleur formant des moyens de commande de carte. Avec cet agencement, la gestion de la batterie est réalisable ; il est possible de fournir une protection contre les courts-circuits ; et un diagnostic est possible pour la batterie et/ou le relais 14. Les fonctions de gestion de la batterie et/ou de diagnostic peuvent être conçues indépendamment des moyens de commande reliés à la carte de commande 22 par le connecteur 20. La carte de commande 22 est par exemple réalisée sous la forme d'un circuit imprimé.

La carte de commande 22 est reliée au relais 14 par des contacts électriques 38 qui sont situés au niveau de la portion froide 36 et ne sont donc pas soumis à la chaleur dégagée par la portion chaude 34. Les contacts électriques 38 sont par exemple soudés ou emmanchés à force.

De manière générale, la carte de commande 22 est adjacente à la portion froide 36 et distante de la portion chaude 34, sauf éventuellement au niveau d'une portion de faible dimension 40. La carte de commande 22 est également agencée à distance des bornes 16 et 18, qui sont également chaudes en fonctionnement.

Le boîtier 12 comprend une partie principale 42 et un couvercle (non représenté). Le couvercle couvre les bornes 16 et 18, l'extrémité des fils 24 et 26 et le circuit 28. Toutefois, le couvercle présente une ouverture au niveau du boîtier de relais 32, de la carte de commande 22 et du connecteur 20, ce qui permet une meilleure évacuation de la chaleur.

Comme on peut le voir sur la figure 1, le boîtier de relais 32, la carte de commande 22 et le connecteur 20 ne présentent pas tous un contour rectangulaire, mais forment un ensemble qui présente un contour sensiblement rectangulaire. Cela permet de limiter l'encombrement.

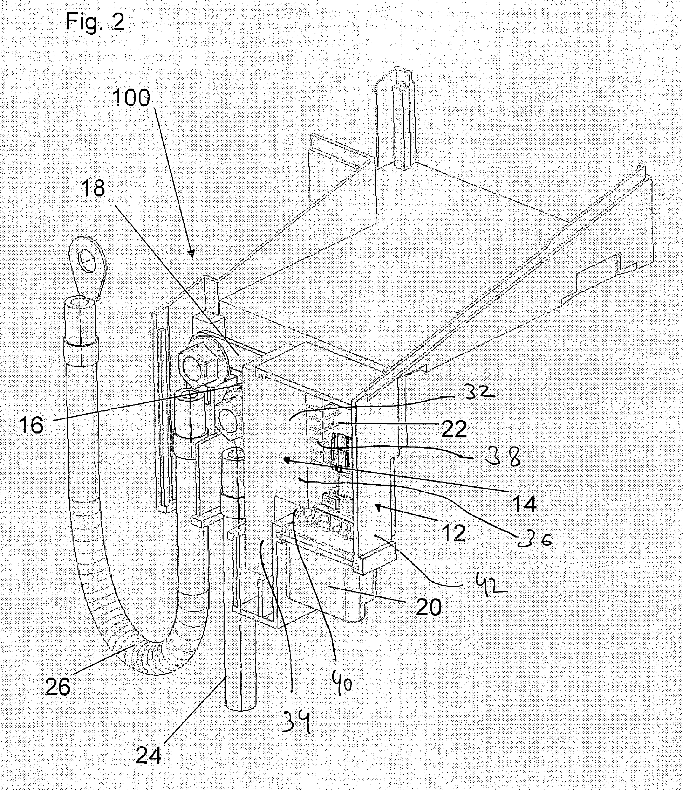

Le système de protection de batterie 100 de la figure 2 est sensiblement le même que sur la figure 1 à l'exception d'une modification de la disposition des composants, et les mêmes parties ont été désignées par les mêmes numéros de référence.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Système de protection de batterie (10, 100) comprenant un boîtier (12) ; des moyens de commutation (14) montés dans le boîtier et ayant une première borne (16) pour une connexion électrique à une source de charge pour une batterie, et une deuxième borne (18) pour une connexion électrique à la batterie ; **caractérisé par le fait qu'**il comprend des moyens d'entrée de signal (20) attaché au boîtier pour recevoir un ou plusieurs signaux depuis des moyens de commande ; une carte de commande (22) montée dans le boîtier et connectée entre les moyens de commutation et les moyens d'entrée de signal pour commander le fonctionnement des moyens de commutation en fonction dudit un ou plusieurs signaux ; et un enduit amovible couvrant les moyens de commutation, les bornes et la carte de commande dans le boîtier.

2. Système selon la revendication 1, dans lequel l'enduit amovible est un adhésif thermofusible.

3. Système selon l'une des revendications 1 à 2, dans lequel les moyens de commutation comprennent un relais.

4. Système selon la revendication 3, dans lequel le relais est un relais bistable, qui a une position par défaut qui connecte électriquement la première et la deuxième borne.

5. Système selon l'une des revendications 1 à 4, dans lequel ledit boîtier présente une ouverture adjacente aux moyens de commutation.

6. Système selon l'une des revendications 1 à 5, dans lequel lesdits moyens de commutation présentent, en fonctionnement, une portion chaude (34) et une portion froide (36), ladite carte de commande étant agencée de manière adjacente à ladite portion froide, à distance de ladite portion chaude.

7. Système selon la revendication 6, dans lequel la carte de commande (22) est reliée aux moyens de commutation (14) par des contacts électriques (38) qui sont situés au niveau de la portion froide (36).

8. Système selon l'une des revendications 1 à 7, dans lequel lesdits moyens de commutation comprennent un boîtier de relais (32), lesdites bornes faisant saillie hors dudit boîtier de relais, ledit boîtier de relais, ladite carte de commande et lesdits moyens d'entrée de signal formant un ensemble qui présente un contour sensiblement rectangulaire.

9. Système selon l'une des revendications 1 à 8, dans lequel ladite carte de commande comprend des moyens de commande de carte aptes à mettre en oeuvre un procédé de gestion de batterie et/ou de diagnostic de batterie.

## Claims

1. Battery protection system (10, 100) comprising a case (12); switching means (14) mounted in the case and having a first terminal (16) for an electrical connection to a charging source for a battery, and a second terminal (18) for an electrical connection to the battery; **characterised by** the fact that it includes signal input means (20) attached to the case to receive one or more signals from control means; a control board (22) mounted in the case and connected between the switching means and the signal input means to control the operation of the switching means as a function of the said one or more signals; and a removable coating covering the switching means, the terminals and the control board in the case.

2. System as described in claim 1, in which the removable coating is a thermofusible adhesive.

3. System as described in one of claims 1 to 2, in which the switching means comprise a relay.

4. System as described in claim 3, in which the relay is a bistable relay, which has a default position which electrically connects the first terminal to the second.

5. System as described in one of claims 1 to 4, in which the said case presents an opening adjacent to the switching means.

6. System as described in one of claims 1 to 5, in which, in operation, the said switching means present a hot portion (34) and a cold portion (36), the said control board being arranged adjacently to the said cold portion, distant from the said hot portion.

7. System as described in claim 6, in which the control board (22) is connected to the switching means (14) by electrical contacts (38) which are situated at the level of the cold portion (36).

8. System as described in one of claims 1 to 7, in which the said switching means comprise a relay unit (32), the said terminals projecting from the said relay unit, the said relay unit, the said control board and the said signal input means forming an assembly which has a substantially rectangular outline.

9. System as described in one of claims 1 to 8, in which the said control board includes board control means able to implement a battery management and/or battery diagnostic process.

## Patentansprüche

1. Batterieschutzsystem (10, 100), umfassend ein Gehäuse (12), Schaltmittel (14), die in dem Gehäuse montiert sind und eine erste Klemme (16) für einen elektrischen Anschluss an eine Ladequelle für eine Batterie und eine zweite Klemme (18) für einen elektrischen Anschluss an die Batterie aufweisen, **dadurch gekennzeichnet, dass** es umfasst: an dem Gehäuse befestigte Signaleingangsmittel (20) zum Empfangen eines oder mehrerer Signale von Steuermitteln, eine Steuerkarte (22), die in dem Gehäuse montiert ist und zwischen die Schaltmittel und die Signaleingangsmittel geschaltet ist, zur Steuerung des Betriebs der Schaltmittel in Abhängigkeit von dem einen oder von mehreren Signalen, und einen entfernbaren Überzug, der die Schaltmittel, die Klemmen und die Steuerkarte in dem Gehäuse bedeckt.

2. System nach Anspruch 1, bei dem der entfernbare Überzug ein Heißschmelzklebstoff ist.

3. System nach einem der Ansprüche 1 und 2, bei dem die Schaltmittel ein Relais umfassen.

4. System nach Anspruch 3, bei dem das Relais ein bistabiles Relais ist, das eine Grundeinstellung besitzt, die die erste und die zweite Klemme elektrisch verbindet.

5. System nach einem der Ansprüche 1 bis 4, bei dem das Gehäuse eine Öffnung aufweist, die an die Schaltmittel angrenzt.

6. System nach einem der Ansprüche 1 bis 5, bei dem die Schaltmittel im Betrieb einen heißen Teil (34) und einen kalten Teil (36) aufweisen, wobei die Steuerkarte an den kalten Teil angrenzend in einem Abstand von dem heißen Teil angeordnet ist.

7. System nach Anspruch 6, bei dem die Steuerkarte (22) mit den Schaltmitteln (14) durch elektrische Kontakte (38) verbunden ist, die auf Höhe des kalten Teils (36) gelegen sind.

8. System nach einem der Ansprüche 1 bis 7, bei dem die Schaltmittel ein Relaisgehäuse (32) umfassen, wobei die Klemmen aus dem Relaisgehäuse hervorstehen, wobei das Relaisgehäuse, die Steuerkarte und die Signaleingangsmittel eine Einheit bilden, die einen im Wesentlichen rechteckigen Umriss aufweist.

9. System nach einem der Ansprüche 1 bis 8, bei dem die Steuerkarte Kartensteuermittel umfasst, die ein Batterie- und/oder Batteriediagnose-Verwaltungsverfahren durchführen können.
